**Europäisches Patentamt**

**European Patent Office**

**Office européen des brevets**

(19)

(11) Veröffentlichungsnummer : **0 084 879 B2**

(12) **NEUE EUROPÄISCHE PATENTSCHRIFT**

(45) Veröffentlichungstag der neuen Patentschrift : **13.05.92 Patentblatt 92/20**

(51) Int. Cl.$^5$ : **C02F 3/28, C02F 1/58**

(21) Anmeldenummer : **83100590.5**

(22) Anmeldetag : **24.01.83**

(54) **Verfahren zum anaeroben Abbau von calciumionenhaltigen Schwemm- und Waschwässern sowie dekantierten Schlammtransportwässern.**

Die Akte enthält technische Angaben, die nach dem Eingang der Anmeldung eingereicht wurden und die nicht in dieserPatentschrift enthalten sind.

(30) Priorität : **25.01.82 DE 3202212**

(43) Veröffentlichungstag der Anmeldung : **03.08.83 Patentblatt 83/31**

(45) Bekanntmachung des Hinweises auf die Patenterteilung : **19.06.85 Patentblatt 85/25**

(45) Bekanntmachung des Hinweises auf die Entscheidung über den Einspruch : **13.05.92 Patentblatt 92/20**

(84) Benannte Vertragsstaaten : **AT DE SE**

(56) Entgegenhaltungen :
**AT-B- 376 379
DE-A- 3 103 760
DE-B- 2 728 585
DE-C- 829 575
DE-C- 2 616 273
DE-C- 2 920 978
Industrial Environmental Research Lab NTIS Publ. PB 277 185 (1978) p.32-39.
Zuckerind.103 (1978) nr.10, S.841-847.
The Sugar Journal (January 1979) S. 9-11.
Zuckerind.107 (1982) nr.9, S.835-838 und 838-842**

(56) Entgegenhaltungen :
**Zuckerind.109 (1984) nr. 1 S.19-27 und nr.2,S.129-133 und 133-136.
J.Water Poll.Contr.Fed.37 (1965) s.97-116.
Baader et al "Biogas in Theorie und Praxis" (1978) S.62.
Ind. and Engin. Chem.44 (1952) 550-552.
R.BRAUN "Biogas Methangärung organischer Abfallstoffe"(1982) S. 119, 122, 123.
Zuckerindustrie 103 (1978) 5. 841-847.
Industrial Environmental research Lab. (1978)
GWF-Wasser/Abwasser 127 (1986) S.215-222.**

(73) Patentinhaber : **Süddeutsche Zucker-Aktiengesellschaft Maximilianstrasse 10 W-6800 Mannheim 1 (DE)**
Patentinhaber : **Sulzer Anlagen- und Gebäudetechnik GmbH Wetzlaerstrasse 99 W-6308 Butzbach (DE)**

(72) Erfinder : **Nähle, Carlos, Dr. Kreuzerweg 22c W-6718 Grünstadt 1 (DE)**
Erfinder : **Neul, Hartmut, Dipl.-Ing. Rothweilstrasse 2 W-6290 Weilburg (DE)**
Erfinder : **Treutler, Kurt, Ing. grad. Taunusstrasse 7 W-6308 Butzbach 9 (DE)**

(74) Vertreter : **Körber, Wolfhart, Dr.rer.nat. et al Patentanwälte Dipl.-Ing. H. Mitscherlich Dipl.-Ing. K. Gunschmann Dr.rer.nat. W. Körber Dipl.Ing. J. Schmidt-Evers Dipl.-Ing.W. Melzer Steinsdorfstrasse 10 W-8000 München 22 (DE)**

**Beschreibung**

Die Erfindung bezieht sich auf ein Verfahren zum anaeroben Abbau von calciumionenhaltigen Schwemm- und Waschwässern sowie dekantierten Schlammtransportwässern aus dem Zuckerherstellungsverfahren, bei dem die Wässer ein- oder mehrstufig in einem Methanreaktor unter Bildung von Methan und Kohlendioxid behandelt werden. Beim Zuckerherstellungsverfahren entstehen Schwemm-und Waschwässer beim Waschen und Transportieren der Zuckerrüben vor dem eigentlichen Zuckerherstellungsprozeß. Schlammtransportwasser ist das Wasser, mit dem man den Rübenerdeschlamm von den Schlammabsetzanlagen in die Sedimentationsteiche oder Deponien transportiert. Das nach Sedimentation des Rübenerdeschlammes überstehende Wasser wird als dekantiertes Schlammtransportwasser bezeichnet.

Aus anderen Verfahren ist heute weitgehend bekannt, wie Schwemm-, Wasch- und Schlammtransportwässer von Rüben-Zuckerfabriken anaerob abgebaut werden können. Der anaerobe Abbau, unter Bildung von Methan und Kohlenstoffdioxid aus dem Substrat, erfolgt im ein oder zweistufigen Verfahren. Das entstehende Biogas wird im Methanreaktor gesammelt und verschiedenen Zwecken zugeführt. Das aufbereitete Wasser kann einer weiteren Aufbereitungsstufe unterworfen werden. Für den anaeroben Abbau der o. a. Wässer sind verschiedene Verfahren entwickelt worden (beispielsweise ANAMET-Verfahren FR-A-2 308 598 und DE-A-2 616 273; CSM-Verfahren DE-C-2 728 585 und DE-A-2 920 978; » Two-Phase anaerobic Digestion« , Process Biochem. 13 (1978) 4, 15-24; CEL-ROBIC-Process: DE-A-3 103 760. Den anaeroben Reaktoren wird je nach Verfahren eine Nachklärung nachgeschaltet (z. B. Lamellenseparation, Dekantation) oder das Abscheidesystem ist in den Reaktoren mit eingebaut.

Unterwirft man dekantierte Schlammtransportwässer oder Schwemm- und Waschwässer, die mit Kalkmilch (Ca(OH)$_2$-Lösungen) bis auf einen pH-Wert größer als 9 alkalisiert werden (Ullmanns Encyklopädie der technischen Chemie, 1969, 3. Auflage, Bd. 19 »Zucker« , S. 210) einem anaeroben Abbau nach den o. g. Verfahren, ist folgendes festzustellen:

– Die dem Methanreaktor zugeführten Calciumionen werden im Reaktor mit einer hohen Eliminierungsrate (60 bis 80%) in Form von Calciumcarbonaten abgeschieden.

– Diese Tatsache führt dazu, daß nach längeren Betriebszeiten eine Anreicherung von anorganischem Schlamm im Methanreaktor stattfindet, so daß nach einiger Zeit ein ordnungsgemäß verlaufender Betrieb der Anlage nicht mehr möglich ist.

– Es finden Calciumcarbonat-Ausfällungen in Rohr- und Sammelleitungen statt, die Verstopfungen an der Anlage verursachen, so daß der anaerobe Prozeß und die nachfolgenden Prozeßstufen, wie Nachklärung usw. erheblich behindert werden.

Um die geschilderten Schwierigkeiten zu umgehen, wurde überraschenderweise gefunden, daß Calcium-Ionen aus dekantierten Schlammtransportwässern sowie aus Schwemm- und Waschwässern von Zuckerfabriken vor dem anaeroben Abbau ausgefällt werden können, wenn die Wässer mit dem im Reaktor entstandenen CO$_2$-haltigen Biogas gewaschen werden. Diese Fällungsreaktion wird ein- oder zweistufig in Gaswäschern oder Entcarbonisierungsreaktoren im Gleich- oder Gegenstromverfahren bei 1,0 bis 1,5 bar durchgeführt und zwar bei dem optimalen Entcarbonisierungspunkt des zu behandelnden Wassers, der je nach Zusammensetzung des Wassers im Bereich von 2 x p-Wert = m-Wert liegt (p- und m-Wert siehe DEV, Deutsche Einheitsverfahren, Verlag Chemie, Weinheim, 3. Auflage (1960) D 8 und H. 7/8). Um den pH-Wert des optimalen Entcarbonisierungs punktes entsprechend 2 x p-Wert = m-Wert einzuhalten, kann eine Dosierung von beispielsweise Natronlauge herangezogen werden. Dabei entstehen Calciumcarbonate, und der Methangehalt im dann zur Verfügung stehenden Gas wird erhöht, so daß Brennbarkeit und Brennwert des Gases erhöht werden. Dabei findet eine Gasreinigung statt, in der das Gas von H$_2$S befreit wird. Reicht das im Biogas vorhandene Kohlendioxid für die Calcium-Fällung nicht aus, werden Carbonatations- und/oder Rauchgas aus der Kesselanlage zur Vorbehandlung des Wassers herangezogen. Die Abtrennung der ausgefällten Calciumcarbonate kann mit Hilfe verschiedener Verfahren durchgeführt werden, beispielsweise durch Filtration, Dekantation oder Zentrifugation. Nach erfolgter Calciumcarbonat-Abtrennung wird das Wasser einer ein- oder zweistufigen Anlage zum anaeroben Abbau zugeführt.

**Patentansprüche**

1. Verfahren zum anaeroben Abbau von calciumionenhaltigen Schwemm- und Waschwässern sowie dekantierten Schlammtransportwässern aus dem Zuckerherstellungsverfahren, bei dem die Wässer ein- oder mehrstufig in einem Methanreaktor unter Bildung von Methan und Kohlendioxid behandelt werden, dadurch gekennzeichnet, daß vor dem anaeroben Abbau eine Calciumionenabscheidung unter Ausfällung als Carbonat erfolgt.

2. Verfahren nach Anspruch 1, dadurch gekennzeichnet, daß die Calciumcarbonat-Ausfällung mit Hilfe des im Methanreaktor gewonnenen $CO_2$-haltigen Biogases durchgeführt wird.

3. Verfahren nach Anspruch 1, dadurch gekennzeichnet, daß die Calciumcarbonat-Ausfällung mit Hilfe von Carbonatationsgas aus dem Zuckerherstellungsverfahren durchgeführt wird.

4. Verfahren nach Anspruch 1, dadurch gekennzeichnet, daß die Carbonat-Ausfällung mit Hilfe von Rauchgas aus einer Kesselanlage durchgeführt wird.

5. Verfahren nach einem oder mehreren der Ansprüche 2 bis 4, dadurch gekennzeichnet, daß die Calcium-Fällung in einem Gaswäscher oder Entcarbonisierungsreaktor im Gleich- oder Gegenstromverfahren bei 1,0-1,5 bar erfolgt, und zwar unter Einstellung des optimalen Entcarbonisierungspunktes der zu behandelnden Wässer.

6. Verfahren nach einem der vorhergehenden Ansprüche, dadurch gekennzeichnet, daß nach der Carbonat-Ausfällung der entstandene Schlamm mit Hilfe von beispielsweise Dekantation, Filtration oder Zentrifugation abgetrennt wird.

## Claims

1. Process for the anaerobic digestion of rinse and wash waters and decanted sludge transport waters containing calcium ions from the process of sugar production, in which the waters are treated in one or more stages in a methane reactor with formation of methane and carbon dioxide, characterised in that calcium ions are removed by precipitation as carbonate before the anaerobic decomposition.

2. Process according to claim 1, characterised in that the calcium carbonate precipitation is performed by means of the $CO_2$-containing bio-gas produced in the methane reactor.

3. Process according to claim 1, characterised in that the calcium carbonate precipitation is performed by means of carbonatation gas from the sugar production process.

4. Process according to claim 1, characterised in that the calcium carbonate precipitation is performed by means of stack gas from a boiler plant.

5. Process according to one or more of claims 2 to 4, characterised in that the calcium carbonate precipitation takes place in a gas washer or carbonate removal reactor in a co-current or counter-current process at 1,0 to 1,5 bar, adjusted to the optimal carbonate removal point of the waters being treated.

6. Process according to one of the preceding claims, characterised in that after the carbonate precipitation the resulting sludge is separated, for example by decantation, filtration or centrifuging.

## Revendications

1. Procédé de dégradation anaérobic d'eaux de décantation et de lavage contenant des ions calcium ainsi que d'eaux décantées servant au transport de boues, provenant du procédé de fabrication du sucre, suivant lequel les eaux sont traitées, en un ou plusieurs étages, dans un réacteur à méthane avec formation de méthane et de dioxyde de carbone, caractérisé en ce qu'il se produit, avant la dégradation anaérobic, une séparation des ions calcium, avec précipitation sous forme de carbonate.

2. Procédé suivant la revendication 1, caractérisé en ce que la précipitation sous forme de carbonate de calcium s'exécute à l'aide du biogaz contenant du $CO_2$ et obtenu à l'aide du réacteur à méthane.

3. Procédé suivant la revendication 1, caractérisé en ce que la précipitation de carbonate de calcium s'exécute à l'aide de gaz de carbonatation provenant du procédé de fabrication du sucre.

4. Procédé suivant la revendication 1, caractérisé en ce que la précipitation de carbonate s'exécute à l'aide de gaz brûlé provenant d'une chaudière.

5. Procédé suivant une ou plusieurs des revendications 2 à 4, caractérisé en ce que la précipitation de calcium s'exécute dans un barboteur ou dans un réacteur de décarbonisation, dans le même sens de courant ou à contre-courant, entre 1,0 à 1,5 bar, avec réglage du point optimal de décarbonisation des eaux à traiter.

6. Procédé suivant une des revendications précédentes, caractérisé en ce qu'après la précipitation de carbonate, la boue résultante est séparée par exemple par décantation, filtration ou centrifugation.